# EUROPÄISCHE PATENTSCHRIFT

(11) **EP 2 767 422 B1**
(45) Veröffentlichungstag und Bekanntmachung des Hinweises auf die Patenterteilung: **28.11.2018**
(21) Anmeldenummer: 13004496.9
(22) Anmeldetag: 14.09.2013
(51) Int. Cl.: B60H 1/00, B60H 1/24, B62D 31/02, B60R 5/00

(54) **DACHVOUTENVORRICHTUNG FÜR EIN FAHRZEUG**
ROOF SPACE DEVICE FOR A VEHICLE
DISPOSITIF DE VOÛTE DE TOIT POUR UN VÉHICULE

(30) Priorität: 15.02.2013 DE 102013002641
(43) Veröffentlichungstag der Anmeldung: 20.08.2014
(73) Patentinhaber: MAN Truck & Bus AG, 80995 München (DE)
(72) Erfinder: Gerlach, Jan, 80469 München (DE); Jarschel, Frank, 73450 Neresheim (DE); Burmeister, Achim, 85232 Bergkirchen (DE)
(74) Vertreter: v. Bezold & Partner Patentanwälte - PartG mbB

(56) Entgegenhaltungen:
- DE-A1- 3 729 050
- GB-A- 959 009
- JP-A- H11 245 651
- JP-A- 2002 120 541

## Beschreibung

Die Erfindung betrifft eine Dachvoutenvorrichtung für ein Fahrzeug, insbesondere einen Omnibus, ein Flugzeug, ein schienengebundenes Fahrzeug (z. B. ein Eisenbahnwagen), etc...

Aus der JP H 11 245651 A1 ist eine Dachvoutenvorrichtung für einen Omnibus bekannt, die zwei öffenbare Klappen aufweist. Zum allgemeinen Stand der Technik kann ferner auf die DE 37 29 050 A1, die GB 959 009 A und die JP 2002 120541 A verwiesen werden.

Bei herkömmlichen Dachvoutenvorrichtungen für Omnibusse erfolgt die Einblasung klimatisierter Luft ungerichtet in den Dachvoutenkanal. Die Luft verteilt sich in Längsrichtung im Dachvoutenkanal zu unterschiedlichen Anteilen in Richtung Fahrzeugfront und Richtung Fahrzeugheck. Bauteile im Dachvoutenquerschnitt, wie etwa Druckluftkessel, Feuerlöschanlagen, Leitungen und elektrische Komponenten, behindern dabei die gleichmäßige Luftverteilung durch Störung der freien Strömung. Eine Abstimmung der Druckverteilung und somit der Luftverteilung innerhalb der Dachvoute ist nicht möglich, da der Querschnitt des Dachvoutenkanals durch die Bauteile variiert und in Teilbereichen stark verengt ist. Eine Steuerung der Luft ist ebenfalls nicht möglich. Die Folge ist eine ungleichmäßige Frischluft- und Wärmeverteilung im Omnibus. Da die klimatisierte Luft die Bauteile im Bereich der Dachvoutenvorrichtung umströmt, ist eine aufwendige Wärmeisolierung der Bauteile und des Rohbaus erforderlich. Trotzdem kann es zu ungewünschter, bauteilschädigender Kondenswasserbildung im Dachvoutenkanal kommen (insbesondere in Bezug auf elektrische Komponenten). Durch einen fehlenden geschlossenen Luftkanal ist es zudem erforderlich, zusätzlich arbeits- und kostenintensive Abdichtungsmaßnahmen im Bereich der Dachvoutenvorrichtung und Dachvoutenschnittstellen durchzuführen, damit die Luft nur an den vorgesehenen Stellen in den Fahrgastraum austreten kann.

Außerdem sind Dachvoutenvorrichtungen mit geschlossenen, mehrkanaligen Luftverteilungssystemen bekannt. Die Luftverteilungssysteme bestehen aus in sich geschlossenen, dichten, abgelängten Profilen. Die Profile, z. B. der Hauptkanal und die Nebenkanäle, sind durch Verbindungsstücke, meist Schläuche, miteinander verbunden. Nachteil dieser Lösung ist z. B., dass zusätzliche Schnittstellen zwischen den Teilkanälen erforderlich sind, welche wiederum zusätzliche Verbindungselemente erfordern und somit potenzielle Undichtigkeitsschnittstellen darstellen. Ein weiterer Nachteil ist insbesondere der Bauraumbedarf. Der fest installierte Luftkanal benötigt innerhalb der Dachvoute einen quasi fixen Querschnitt, was zu einem zusätzlichen Querschnittsbedarf für den Luftkanal oder die Luftkanäle und somit einem höheren gesamten Dachvoutenquerschnitt führt. Das wiederum führt nachteilhaft zu höheren Bauteilkosten und einem höheren Gewicht pro laufendem Meter. Eine optimale Luftkanalanordnung unter Berücksichtigung der Ausströmöffnungen führt dazu, dass sich der Wartungszugang durch die Luftkanäle verkleinert oder sogar blockiert wird oder umgekehrt zu einem geringeren Luftkanalquerschnitt.

Eine Aufgabe der Erfindung ist es, eine alternative und/oder verbesserte Dachvoutenvorrichtung für ein Fahrzeug, insbesondere einen Omnibus, zu schaffen.

Diese Aufgabe kann mit den Merkmalen des unabhängigen Anspruchs gelöst werden. Vorteilhafte Weiterbildungen sind den Unteransprüchen zu entnehmen. Die Erfindung ist allerdings nicht auf Ausführungsformen beschränkt, die sämtliche eingangs genannten Probleme oder Nachteile des Standes der Technik beseitigen. Vielmehr beansprucht die Erfindung auch allgemeinen Schutz für die nachstehend beschriebenen Ausführungsformen im Rahmen der Patentansprüche.

Die Erfindung schafft eine Dachvoutenvorrichtung für ein Fahrzeug, insbesondere einen Omnibus. Die Dachvoutenvorrichtung umfasst eine Abdeckkonstruktion, die zum Abdecken eines zweckmäßig hinter der Abdeckkonstruktion ausgebildeten Aufnahmeraums ausgeführt ist. Zudem umfasst die Dachvoutenvorrichtung einen ersten Halteabschnitt (z. B. ein oder mehrere winkelförmige Halteteile, die sich vorzugsweise in Höhenrichtung des Fahrzeugs erstrecken) und einen zweiten Halteabschnitt (z. B. ein oder mehrere Längsprofile, die sich vorzugsweise in Längsrichtung des Fahrzeugs erstrecken), die zur Montage der Abdeckkonstruktion an das Fahrzeug dienen.

Die Dachvoutenvorrichtung zeichnet sich insbesondere durch zwei der Abdeckkonstruktion zugeordnete öffenbare Abdeckteile aus, die z. B. einstückig gemeinsam oder unabhängig voneinander geöffnet werden können, um einen Wartungszugang zu dem Aufnahmeraum zu schaffen. Die zwei Abdeckteile sind zweckmäßig paneel- oder plattenförmig ausgeführt.

Zwischen den zwei Abdeckteilen erstreckt sich ein Klimakanal. Wenn kein Klimakanal benötigt wird, kann eines der Abdeckteile entfallen. Die Dachvoutenvorrichtung kann somit zweckmäßig einfach an Ausführungsformen mit und ohne Klimakanal angepasst werden.

Vorzugsweise sind die zwei Abdeckteile abnehmbar und/oder zweckmäßig nach unten verschwenkbar ausgeführt. Zumindest eines der zwei Abdeckteile kann z. B. als verschwenkbare Klappe ausgeführt sein.

Die zwei Abdeckteile können z. B. über jeweils ein Gelenkmittel schwenkbar an den ersten Halteabschnitt gekoppelt sein, um zweckmäßig nach unten aufgeklappt werden zu können.

Die Abdeckkonstruktion kann zudem ein Abdeckprofil aufweisen. Das Abdeckprofil umfasst zweckmäßig zwei abstehende Armabschnitte die zur insbesondere dichtenden Anlage mit den zwei Abdeckteilen ausgeführt sind. Das Abdeckprofil wird zweckmäßig an dem zweiten Halteabschnitt gehalten. Es ist möglich, dass auch das Abdeckprofil abnehmbar und/oder verschwenkbar ausgeführt ist.

Ferner kann die Abdeckkonstruktion ein Randprofil aufweisen, das vorzugsweise ebenfalls abnehmbar und/oder verschwenkbar ausgeführt ist und zweckmäßig an dem zweiten Halteabschnitt gehalten wird.

Das Randprofil kann eine Aufnahmeöffnung für zumindest ein Funktionselement aufweisen, z. B. für eine Lautsprecher, eine Kamera und/oder einen Nothahn.

Der zuvor erwähnte Raum und somit zweckmäßig der Klimakanal wird vorzugsweise durch die zwei Abdeckteile, das Abdeckprofil und den ersten Halteabschnitt in Umfangsrichtung begrenzt.

Die zwei Abdeckteile umfassen ein dem Fahrgastraum zugewandtes Abdeckteil und ein dem Aufnahmeraum zugewandtes Abdeckteil. Das dem Fahrgastraum zugewandte Abdeckteil kann mit zumindest einer Düse (z. B. eine oder mehrere Ausblasschlitze) zur vorzugsweise direkten Klimatisierung des Fahrgastraums ausgestattet sein. Ebenso kann das Abdeckprofil mit zumindest einer Düse (z. B. eine oder mehrere Ausblasschlitze) zur zweckmäßig direkten Klimatisierung des Fahrgastraums ausgestattet werden.

Es ist möglich, dass die Abdeckkonstruktion mit Dichtelementen (z. B. Dichtstegen) versehen ist, um den Raum zwischen den zwei Abdeckteilen und somit den Klimakanal gegenüber dem Fahrgastraum und/oder dem Aufnahmeraum abzudichten.

Es ist möglich, dass eines der Abdeckteile (zweckmäßig das dem Fahrgastraum zugewandte Abdeckteil) über zumindest eine Befestigungseinrichtung, z. B. ein Hakenstruktur, verfügt, um sich selbst und das andere Abdeckteil selbsttätig in zumindest teilgeöffnetem Zustand zu halten und zwar vorzugsweise ohne zusätzliche Hilfsmittel. Dadurch kann ein ungewolltes Zurückschwenken der Abdeckteile z. B. während einer Wartung eines im Aufnahmeraum verbauten Bauteils verhindert werden.

Zu erwähnen ist noch, dass der zweckmäßig als Längsprofil ausgeführte erste Halteabschnitt zur Aufnahme der direkten und/oder indirekten Beleuchtung für den Fahrgastraum ausgeführt sein kann.

Die Erfindung ist nicht auf eine Dachvoutenvorrichtung beschränkt, sondern umfasst auch ein Fahrzeug, insbesondere einen Omnibus, mit einer Dachvoutenvorrichtung wie hierin beschrieben.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine Querschnittsansicht einer in einem Omnibus verbauten Dachvoutenvorrichtung gemäß einer Ausführungsform der Erfindung,
- Fig. 2: zeigt eine Querschnittsansicht der Dachvoutenvorrichtung der Fig. 1, allerdings mit einem aufgeklappten Abdeckteil,
- Fig. 3: zeigt eine perspektivische Ansicht der Dachvoutenvorrichtung der Fig. 2,
- Fig. 4: zeigt eine Querschnittsansicht der Dachvoutenvorrichtung der Fig. 1, allerdings mit zwei aufgeklappten Abdeckteilen,
- Fig. 5: zeigt eine Querschnittsansicht der Dachvoutenvorrichtung der Fig. 1, allerdings mit zwei aufgeklappten Abdeckteilen, abgenommenem Abdeckprofil und nach unten verschwenktem Randprofil, und
- Fig. 6: zeigt eine perspektivische Ansicht der Dachvoutenvorrichtung der Fig. 5.

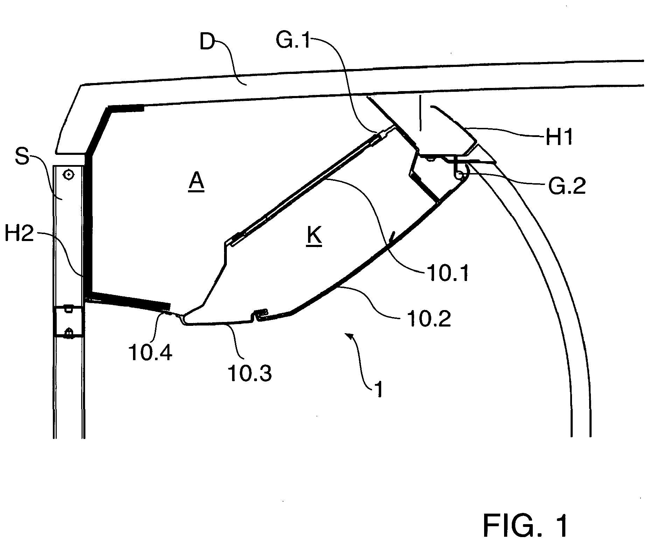

Figur 1 zeigt eine Querschnittsansicht einer in einen Omnibus eingebauten Dachvoutenvorrichtung 1 gemäß einer Ausführungsform der Erfindung. Die Dachvoutenvorrichtung 1 überspannt wie üblich einen oberen Eckabschnitt zwischen einer Dachkonstruktion D und einer Seitenkonstruktion S (z. B. einer Rahmen- oder Gerippekonstruktion) des Omnibusses.

Die Dachvoutenvorrichtung 1 umfasst eine Abdeckkonstruktion 10.1-10.4, die zum Abdecken eines hinter der Abdeckkonstruktion 10.1-10.4 ausgebildeten Aufnahmeraums A ausgeführt ist, und einen ersten Halteabschnitt H1 und einen zweiten Halteabschnitt H2, die zur Montage der Abdeckkonstruktion 10.1-10.4 an den Omnibus dienen. Der erste Halteabschnitt H1 ist als ein an die Dachkonstruktion D befestigtes, schematisch dargestelltes Längsprofil ausgeführt, das die direkte und/oder indirekte Beleuchtung für den Fahrgastraum aufnimmt und sich in Längsrichtung des Omnibusses erstreckt. Der zweite Halteabschnitt H2 ist als winkelförmiges Tragelement ausgeführt, das sich in Höhenrichtung des Omnibusses erstreckt und ebenfalls an der Dachkonstruktion D befestigt ist, aber prinzipiell auch an der Seitenkonstruktion S montiert sein könnte.

Die Abdeckkonstruktion 10.1-10.4 weist zwei zweckmäßig dünnwandige platten- oder paneelförmige Abdeckteile 10.1-10.2 auf, die öffenbar und zweckmäßig schließbar ausgeführt sind.

Die Abdeckkonstruktion 10.1-10.4 umfasst ferner ein Abdeckprofil 10.3, das zwei abstehende Armabschnitte zur dichtenden Anlage mit den zwei Abdeckteilen 10.1-10.2 aufweist. Das Abdeckprofil 10.3 ist abnehmbar und alternativ oder ergänzend nach unten verschwenkbar an dem zweiten Halteabschnitt H2 gehalten.

Die Abdeckkonstruktion 10.1-10.4 weist außerdem ein Rand- oder Abschlussprofil 10.4 auf, das ebenfalls abnehmbar und alternativ oder ergänzend nach unten verschwenkbar an dem zweiten Halteabschnitt H2 gehalten wird. Das Randprofil 10.4 ist mit mehreren Aufnahmeöffnungen für Funktionselemente ausgestattet, wie etwa Lautsprecher, Kameras, Nothähne, etc..

Das Abdeckteil 10.1 ist über ein Gelenkmittel G1 schwenkbar an den ersten Halteabschnitt H1 gekoppelt, während das Abdeckteil 10.2 über ein Gelenkmittel G2 schwenkbar an den ersten Halteabschnitt H1 gekoppelt ist. Die Gelenkmittel G1 und G2 ermöglichen, dass die zwei Abdeckteile 10.1-10.2 nach unten aufgeklappt werden können, um einen Wartungszugang zu dem Aufnahmeraum A zu schaffen.

Zwischen den zwei Abdeckteilen 10.1-10.2 erstreckt sich ein Raum zur Ausbildung eines Klimakanals K. Der Raum und somit der Klimakanal K wird durch die zwei Abdeckteile 10.1-10.2, das Abdeckprofil 10.3 und den ersten Halteabschnitt H1 räumlich begrenzt.

Das Abdeckprofil 10.3 und der erste Halteabschnitt H1 sind mit nicht gezeigten, über den Klimakanal K versorgten Düsen, insbesondere Ausblasschlitzen zur direkten Klimatisierung des Fahrgastraums ausgestattet. Ebenso kann optional das dem Fahrgastraum zugewandte Abdeckteil 10.2 mit solchen Düsen ausgestattet sein.

Die Abdeckkonstruktion 10.1-10.4 ist an insbesondere öffenbaren Kopplungsstellen mit Dichtstegen versehen, um den Raum und somit den Klimakanal K einerseits gegenüber dem Fahrgastraum und andererseits gegenüber dem Aufnahmeraum A abzudichten.

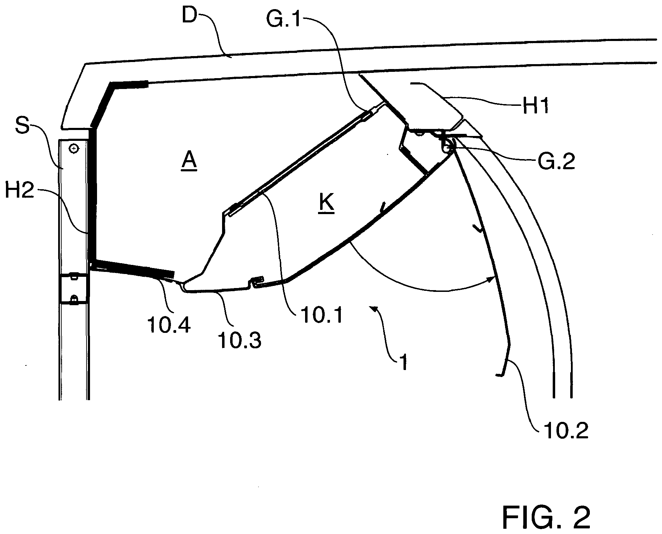

Figur 2 zeigt eine Querschnittsansicht der Dachvoutenvorrichtung 1 der Figur 1. Figur 2 zeigt das dem Fahrgastraum zugewandte Abdeckteil 10.2 in nach unten aufgeklapptem Zustand, was durch den Bogenpfeil in Figur 2 schematisch angedeutet ist, während das dem Aufnahmeraum A zugewandte Abdeckteil 10.1 in geschlossenem Zustand ist.

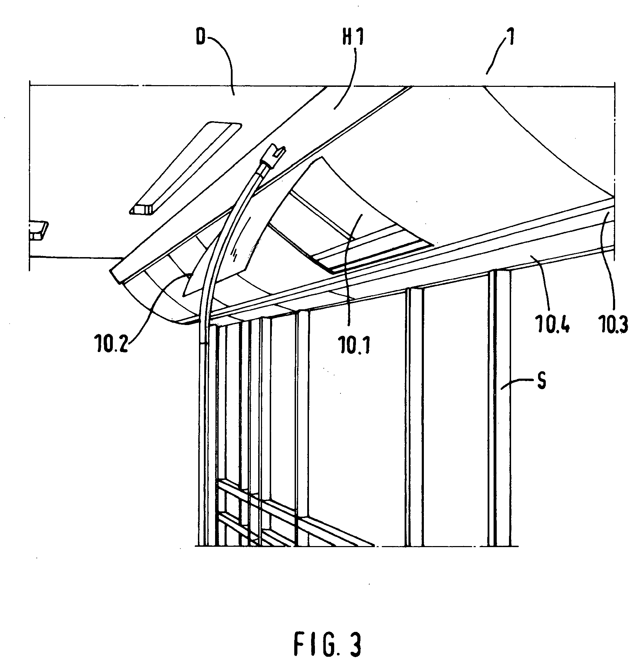

Figur 3 zeigt die Dachvoutenvorrichtung 1 der Figur 2 mit geschlossenem Abdeckteil 10.1 und geöffnetem Abdeckteil 10.2, allerdings in perspektivischer Ansicht.

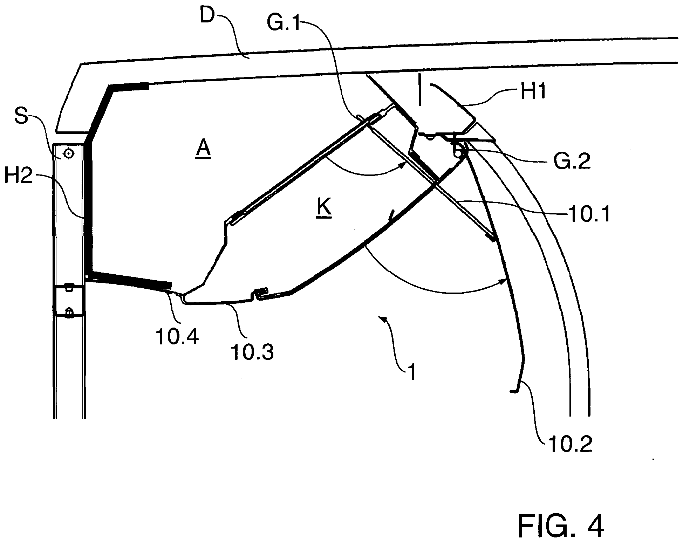

Figur 4 zeigt eine Querschnittsansicht der Dachvoutenvorrichtung 1 der Figur 1, allerdings mit geöffnetem, nach unten aufgeklapptem Abdeckteil 10.1 und geöffnetem, nach unten aufgeklapptem Abdeckteil 10.2, was durch die zwei Bogenpfeile in Figur 4 schematisch angedeutet ist. Wenn die zwei Abdeckteile 10.1-10.2 in geöffnetem Zustand sind, kann problemlos auf in dem Aufnahmeraum A üblicherweise angeordnete Bauteile zugegriffen werden.

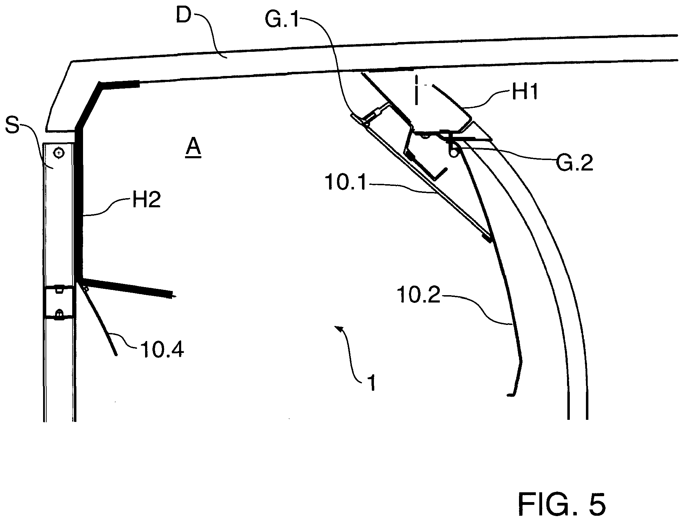

Figur 5 zeigt eine Querschnittsansicht der Dachvoutenvorrichtung 1 der Figur 1, allerdings wiederum mit geöffneten, nach unten aufgeklappten Abdeckteilen 10.1-10.2. In Figur 5 ist zudem das Abdeckprofil 10.3 abgenommen und das Randprofil 10.4 nach unten verschwenkt. Dadurch kann ein noch größerer Wartungszugang in den Aufnahmeraum A erzielt werden. Das dem Fahrgastraum zugewandte Abdeckteil 10.2 verfügt über eine Befestigungseinrichtung, z. B. eine Hakenstruktur, um sich selbst und das Abdeckteil 10.1 selbsttätig in geöffnetem Zustand zu halten und zwar vorzugsweise ohne sonstige Hilfsmittel. Dadurch kann ein ungewolltes Zurückschwenken der Abdeckteile 10.1-10.2 ohne weitere manuelle Zuhilfenahme vermieden werden.

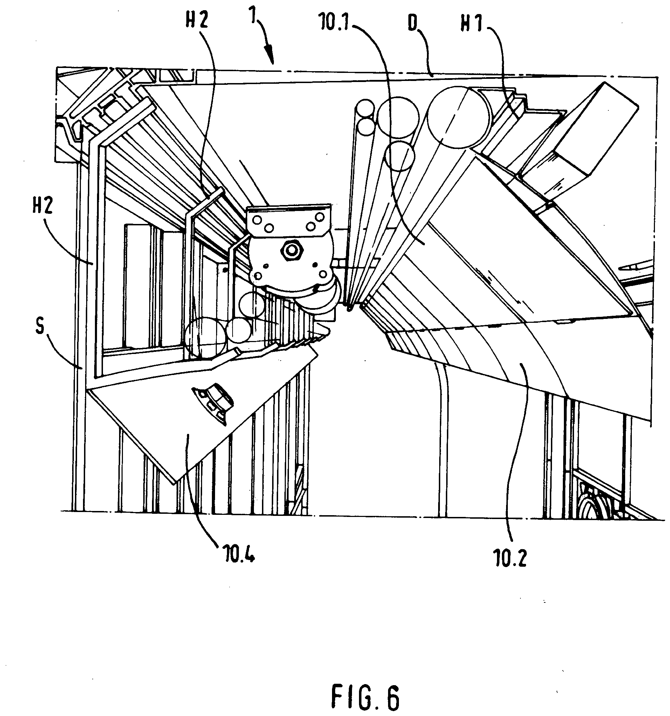

Figur 6 zeigt die Dachvoutenvorrichtung 1 der Figur 5, allerdings in perspektivischer Ansicht und mit Bauteilen, die üblicherweise im Aufnahmeraum A aufgenommen sind.

Die Erfindung ist nicht auf die oben beschriebenen bevorzugten Ausführungsformen beschränkt. Vielmehr ist eine Vielzahl von Varianten und Abwandlungen möglichen, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

## Patentansprüche

1. Dachvoutenvorrichtung (1) für ein Fahrzeug, insbesondere einen Omnibus, mit
- einem Aufnahmeraum (A),
- einer Abdeckkonstruktion (10.1-10.4), die zum Abdecken des Aufnahmeraums (A) ausgeführt ist, und
- einem ersten Halteabschnitt (H1) und einem zweiten Halteabschnitt (H2), die zur Montage der Abdeckkonstruktion (10.1-10.4) an das Fahrzeug dienen,
wobei
- die Abdeckkonstruktion (10.1-10.4) zwei öffenbare Abdeckteile (10.1-10.2) umfasst,
**dadurch gekennzeichnet, dass**
- sich zwischen den zwei Abdeckteilen (10.1-10.2) ein Raum zur Ausbildung eines Klimakanals (K) erstreckt.

2. Dachvoutenvorrichtung (1) nach Anspruch 1, **dadurch gekennzeichnet, dass** die zwei Abdeckteile (10.1-10.2) abnehmbar und/oder verschwenkbar ausgeführt sind.

3. Dachvoutenvorrichtung (1) nach einem der vorhergehenden Ansprüche, **dadurch gekennzeichnet, dass** die zwei Abdeckteile (10.1-10.2) über jeweils ein Gelenkmittel (G.1-G.2) schwenkbar an den ersten Halteabschnitt (H1) gekoppelt sind, um nach unten aufgeklappt werden zu können.

4. Dachvoutenvorrichtung (1) nach einem der vorhergehenden Ansprüche, **dadurch gekennzeichnet, dass** die Abdeckkonstruktion (10.1-10.4) zusätzlich ein Abdeckprofil (10.3) aufweist, das zwei abstehende Armabschnitte zur Anlage mit den zwei Abdeckteilen (10.1-10.2) umfasst und das vorzugsweise an dem zweiten Halteabschnitt (H2) gehalten wird.

5. Dachvoutenvorrichtung (1) nach Anspruch 4, **dadurch gekennzeichnet, dass** das Abdeckprofil (10.3) abnehmbar und/oder verschwenkbar ausgeführt ist.

6. Dachvoutenvorrichtung (1) nach einem der vorhergehenden Ansprüche, **dadurch gekennzeichnet, dass** die Abdeckkonstruktion (10.1-10.4) zudem ein Randprofil (10.4) aufweist, das abnehmbar und/oder verschwenkbar ausgeführt ist und das vorzugsweise an dem zweiten Halteabschnitt (H2) gehalten wird.

7. Dachvoutenvorrichtung (1) nach Anspruch 6 **dadurch gekennzeichnet, dass** das Randprofil (10.4) zumindest eine Aufnahmeöffnung für zumindest ein Funktionselement aufweist, vorzugsweise einen Lautsprecher, eine Kamera und/oder einen Nothahn.

8. Dachvoutenvorrichtung (1) nach einem der vorhergehenden Ansprüche, **dadurch gekennzeichnet, dass** der Raum durch die zwei Abdeckteile (10.1-10.2), das Abdeckprofil (10.3) und den ersten Halteabschnitt (H1) begrenzt wird.

9. Dachvoutenvorrichtung (1) nach einem der vorhergehenden Ansprüche, **dadurch gekennzeichnet, dass** das dem Fahrgastraum zugewandte Abdeckteil (10.2) und/oder das Abdeckprofil (10.3) mit zumindest einer Düse zur Klimatisierung des Fahrgastraums ausgestattet ist.

10. Dachvoutenvorrichtung (1) nach einem der vorhergehenden Ansprüche, **dadurch gekennzeichnet, dass** die Abdeckkonstruktion (10.1-10.4) mit Dichtelementen versehen ist, um den Raum zwischen den zwei Abdeckteilen (10.1-10.2) gegenüber dem Fahrgastraum und/oder dem Aufnahmeraum (A) abzudichten.

11. Dachvoutenvorrichtung (1) nach einem der vorhergehen Ansprüche, **dadurch gekennzeichnet, dass** eines der Abdeckteile (10.2) eine Befestigungseinrichtung, insbesondere eine Hakenstruktur, umfasst, um sich selbst und das andere Abdeckteil (10.1) selbsttätig in zumindest teilgeöffnetem Zustand zu halten und zwar vorzugsweise ohne sonstige Hilfsmittel.

12. Dachvoutenvorrichtung (1) nach einem der vorhergehenden Ansprüche, **dadurch gekennzeichnet, dass** der erste Halteabschnitt (H1) als Längsprofil ausgeführt ist und zur Aufnahme der direkten und/oder indirekten Beleuchtung für den Fahrgastraum dient.

13. Fahrzeug, insbesondere Omnibus, mit einer Dachvoutenvorrichtung (1) nach einem der vorhergehenden Ansprüche.

## Claims

1. Roof vault device (1) for a vehicle, more particularly an omnibus, with
- a socket space (A),
- a cover structure (10.1-10.4) which is designed for covering the socket space (A), and
- a first holding section (H1) and a second holding section (H2) which serve for mounting the cover structure (10.1-10.4) on the vehicle,
wherein
- the cover structure (10.1-10.4) comprises two cover parts (10.1-10.2) which are capable of opening, **characterized in that**
- a space extends between the two cover parts (10.1-10.2) to form an air conditioning duct (K).

2. Roof vault device (1) according to Claim 1 **characterized in that** the two cover parts (10.1-10.2) are designed so that they can be removed and/or pivoted away.

3. Roof vault device (1) according to one of the preceding claims **characterized in that** the two cover parts (10.1-10.2) are coupled for pivotal movement on the first holding section (H1) via articulation means (G.1-G.2) in order that they may be unfolded downwards.

4. Roof vault device (1) according to one of the preceding claims **characterized in that** the cover structure (10.1-10.4) has additionally a cover profile (10.3) which comprises two protruding arm sections for bearing against the two cover parts (10.1-10.2) and which is preferably held on the second holding section (H2) .

5. Roof vault device (1) according to Claim 4 **characterized in that** the cover profile (10.3) is designed to be removable and/or pivotal.

6. Roof vault device (1) according to one of the preceding claims **characterized in that** the cover structure (10.1-10.4) further has a marginal profile (10.4) which is designed to be removable and/or pivotal and which is preferably held on the second holding section (H2).

7. Roof vault device (1) according to Claim 6 **characterized in that** the marginal profile (10.4) has at least one socket opening for at least one functional element, preferably a speaker, a camera and/or an emergency stopcock.

8. Roof vault device (1) according to one of the preceding claims **characterized in that** the space is defined by the two cover parts (10.1-10.2), the cover profile (10.3) and the first holding section (H1).

9. Roof vault device (1) according to one of the preceding claims **characterized in that** the cover part (10.2) facing the passenger cabin and/or the cover profile (10.3) is fitted with at least one nozzle for air-conditioning the passenger cabin.

10. Roof vault device (1) according to one of the preceding claims **characterized in that** the cover structure (10.1-10.4) is provided with sealing elements in order to seal the space between the two cover parts (10.1-10.2) from the passenger cabin and/or the socket space (A).

11. Roof vault device (1) according to one of the preceding claims **characterized in that** one of the cover parts (10.2) comprises a fastening device, more particularly a hook structure in order to hold itself and the other cover part (10.1) automatically in the at least partly opened position, namely preferably without other aids.

12. Roof vault device (1) according to one of the preceding claims **characterized in that** the first holding section (H1) is designed as a longitudinal profile and serves to house the direct and/or indirect lighting for the passenger cabin.

13. Vehicle, more particularly an omnibus, with a roof vault device (1) according to one of the preceding claims.

## Revendications

1. Dispositif de voûte de toit (1) pour un véhicule, en particulier un omnibus, comprenant
- un espace de logement (A),
- une construction de recouvrement (10.1-10.4) qui est réalisée de manière à recouvrir l'espace de logement (A), et
- une première portion de retenue (H1) et une deuxième portion de retenue (H2) qui servent au montage de la construction de recouvrement (10.1-10.4) sur le véhicule,
- la construction de recouvrement (10.1-10.4) comprenant deux parties de recouvrement pouvant être ouvertes (10.1-10.2),
**caractérisé en ce**
- **qu'**entre les deux parties de recouvrement (10.1-10.2) s'étend un espace pour réaliser un conduit de climatisation (K).

2. Dispositif de voûte de toit (1) selon la revendication 1, **caractérisé en ce que** les deux parties de recouvrement (10.1-10.2) sont réalisées de manière amovible et/ou pivotante.

3. Dispositif de voûte de toit (1) selon l'une quelconque des revendications précédentes, **caractérisé en ce que** les deux parties de recouvrement (10.1-10.2) sont accouplées de manière pivotante à la première portion de retenue (H1), à chaque fois par le biais d'un moyen d'articulation (G.1-G.2), afin de pouvoir être rabattues vers ke bas.

4. Dispositif de voûte de toit (1) selon l'une quelconque des revendications précédentes, **caractérisé en ce que** la construction de recouvrement (10.1-10.4) présente en outre un profilé de recouvrement (10.3) qui comprend deux portions de bras saillantes destinées à venir en appui avec les deux parties de recouvrement (10.1-10.2) et qui est de préférence retenu sur la deuxième portion de retenue (H2).

5. Dispositif de voûte de toit (1) selon la revendication 4, **caractérisé en ce que** le profilé de recouvrement (10.3) est réalisé de manière amovible et/ou pivotante.

6. Dispositif de voûte de toit (1) selon l'une quelconque des revendications précédentes, **caractérisé en ce que** la construction de recouvrement (10.1-10.4) présente en outre un profilé de bord (10.4) qui est réalisé de manière amovible et/ou pivotante et qui est retenu de préférence sur la deuxième portion de retenue (H2) .

7. Dispositif de voûte de toit (1) selon la revendication 6, **caractérisé en ce que** le profil de bord (10.4) présente au moins une ouverture de réception pour au moins un élément fonctionnel, de préférence un haut-parleur, une caméra et/ou un robinet de secours.

8. Dispositif de voûte de toit (1) selon l'une quelconque des revendications précédentes, **caractérisé en ce que** l'espace est limité par les deux parties de recouvrement (10.1-10.2), le profilé de recouvrement (10.3) et la première portion de retenue (H1).

9. Dispositif de voûte de toit (1) selon l'une quelconque des revendications précédentes, **caractérisé en ce que** la partie de recouvrement (10.2) tournée vers l'habitacle de conduite et/ou le profilé de recouvrement (10.3) est configuré(e) avec au moins une buse pour la climatisation de l'habitacle de conduite.

10. Dispositif de voûte de toit (1) selon l'une quelconque des revendications précédentes, **caractérisé en ce que** la construction de recouvrement (10.1-10.4) est pourvue d'éléments d'étanchéité afin d'étanchéifier l'espace entre les deux parties de recouvrement (10.1-10.2) par rapport à l'habitacle de conduite et/ou par rapport à l'espace de logement (A).

11. Dispositif de voûte de toit (1) selon l'une quelconque des revendications précédentes, **caractérisé en ce que** l'une des parties de recouvrement (10.2) comprend un dispositif de fixation, en particulier une structure de crochet afin de se retenir elle-même et de retenir l'autre partie de recouvrement (10.1) automatiquement dans un état au moins partiellement ouvert et ce de préférence sans autres moyens auxiliaires supplémentaires.

12. Dispositif de voûte de toit (1) selon l'une quelconque des revendications précédentes, **caractérisé en ce que** la première portion de retenue (H1) est réalisée sous forme de profilé longitudinal et sert à recevoir l'éclairage direct et/ou indirect pour l'habitacle de conduite.

13. Véhicule, en particulier omnibus, comprenant un dispositif de voûte de toit (1) selon l'une quelconque des revendications précédentes.
